Europäisches Patentamt

(19) European Patent Office

Office européen des brevets

(11) Publication number: **0 093 525**
**B1**

## EUROPEAN PATENT SPECIFICATION

(45) Date of publication of the patent specification:
02.10.85

(51) Int. Cl.⁴: **H 04 L 9/02**, H 04 K 1/02

(21) Application number: **83302114.0**

(22) Date of filing: **14.04.83**

(54) Broadcasting encrypted signals.

(30) Priority: **30.04.82 GB 8212623**

(43) Date of publication of application:
**09.11.83 Bulletin 83/45**

(45) Publication of the grant of the patent:
**02.10.85 Bulletin 85/40**

(84) Designated Contracting States:
**AT BE CH DE FR GB IT LI LU NL SE**

(56) References cited:
**EP - A - 0 073 323**
**WO - A - 81/01933**
**WO - A - 83/01881**
**US - A - 3 291 908**

**1979 NATIONAL TELECOMMUNICATIONS
CONFERENCE RECORD, vol. 3, November 1979, pages
43.5.1 - 43.5.8, New York, USA F:H: MYERS: "A data link
encryption system".
IBM TECHNICAL DISCLOSURE BULLETIN, vol. 24, no. 8,
January 1982, pages 4363-4364, New York, USA J.W.
FENNEL et al.: " Clock-protected cryptography".**

(73) Proprietor: **BRITISH TELECOMMUNICATIONS,
2-12 Gresham Street, London EC2V 7AG (GB)**

(72) Inventor: **Serpell, Stephen Charles, 35 Elhurst Drive,
Ipswich IP3 0PB (GB)**
Inventor: **Brookson, Charles Bile, 21 Meadowvale Close,
Ipswich IP4 4HE (GB)**
Inventor: **Gordon, John Asley, 18 Roe Green Close,
Hatfield Hertfordshire (GB)**
Inventor: **King, Graham Kenneth, 13 Gibbons Close
Sandridge, St. Albans Hertfordshire (GB)**

(74) Representative: **Smith, Norman Ian et al, F.J.
CLEVELAND & COMPANY 40-43 Chancery Lane,
London WC2A 1JQ (GB)**

## Description

This invention relates to the transmission of encrypted signals.

Telecommunications, e. g. speech, data, video, facsimile, have been transmitted over closed networks so that eavesdropping has been very difficult. It is now proposed to use satellite radio links in which signals are broadcast over wide areas, e. g. the whole of Europe. In these circumstances eavesdropping is so simple that there is a danger of unacceptable loss of privacy. To restore privacy it is intended to encrypt signals in such broadcast channels. More specifically it is intended to encrypt the signals using the »Data Encryption Standard« described in »FIPS PUB 46« of National Bureau of Standards of Department of Commerce of US Government. To facilitate understanding of this invention it is convenient to provide a brief description of the »output feedback mode« as described in »FIPS PUB 81«. The publication defines an algorithm which has a data a key and an input work both of 64 bits. From these two items of data the algorithm produces a pseudorandomised output word of 64 bits. (In the K-bit output feedback mode the K most significant bits of the »output word« are exclusively ORed with K bits of the message to be encrypted. The next »input word« is formed by discarding the most significant K bits of the last »input word«, shifting the remaining bits K positions to the left, and then inserting the K output bits first used into the least significant bit positions). Thus in the 64-bit output feedback mode there is a chain in which the nth output word becomes the $(n+1)$th input word. In order to start the chain it is necessary to provide the key (which is fixed throughout the chain) and the first input word; it is convenient to call this first input word the »initialisation vector« or »IV«. The algorithm described in »Data Encryption Standard« (FIPS PUB 46) is generally known as the DES algorithm.

When used as described above, the output feedback mode generates a very long pseudorandom bit-stream. This bit-stream is used to encipher a binary signal by pairing its with the bits of the pseudorancom bit-stream and operating with »exclusive or« on each pair. Decrypting is carried out by repeating the encrypting process. Thus the recipient generates the same pseudorandom stream, reforms the same pairs and repeats the »exclusive or«. It is essential to obtain exact synchronisation and this causes practical problems in the use of this mode of the DES algorithm.

The DES algorithm has been used in telecommunications in output feedback mode and synchronisation has been achieved by »handshake« procedures. These require two-way communication and it is now desired to extend the use of the algorithms so that it can be used in one-way systems. It is also intended to use satellite systems wherein there are a plurality of receivers for one transmitter. In such circumstances handshake procedures become complicated and cumbersome or even impractical. In a one-way system the number of receivers is not important.

It is known from WO-A-81/01933 to provide a method of communicating over data links using binary synchronous protocol in which an initialisation vector is included at the end of each message. In this method the initialisation vector is used to initialise in preparation for the next cipher.

According to a first aspect of the present invention there is provided a method of producing encrypted data which comprises: —

(a) generating a pseudorandom key from an initialisation vector and a fixed key,

(b) combining the pseudorandom key with data to procuce encrypted data; characterised in that: —

(c) the method is operated continuously on data in the form of continuous telecommunications traffic,

(d) an input code indicating the use of a new initialisation vector is periodically generated,

(e) a new initialisation vector is formed from a continuous initialisation signal on each occurrence of said input code,

(f) the continuous initialisation signal and the periodically occurring input code are multiplexed with the encrypted traffic to produce a composite signal which is transmitted.

According to a scond aspect of the present invention there is provided a method of producing a decrypt from encrypted data which comprises:—

(a) generating a pseudorandom key from an initialisation vector and a fixed key,

(b) combining the pseudorandom key with encrypted data; characterised in that: —

(c) the method is operated continuously on continuously received telecommunications traffic transmitted according to said first aspect and the initialisation vector is formed from a continuous initialisation signal and a periodically occurring input code demultiplexed from the received traffic.

According to a third aspect of the invention there is provided a pseudorandomiser which comprises a ciphering engine adapted to generate a pseudorandom key from an initialisation vector and a fixed key characterised in that the pseudorandomiser also includes: —

(a) means for generating a continuous initialisation signal,

(b) means for periodically generating an input code,

(c) an initialisation register for forming a new initialisation vector from the continuous initialisation signal on each occurrence of said input code,

(d) transfer means for transferring the content of the initialisation register as input to the ciphering engine on receipt of the input code, and

(e) output means for converting the pseudorandom key into a continous pseudorandom signal.

According to a fouth aspect of the invention there is provided a transmitter for carrying out a method according to said first aspect characterised in that it includes a pseudorandomiser according to said third aspect and a combining means for receiving data in the form of a continuous telecommunications signal, said comining means being connected to the output means of the pseudorandomiser whereby the input signal is encrypted, the transmitter also comprising a multiplexer connected to the random number generator and a multiplexer connected to the control means whereby the initialisation signal and the periodically occuring input code are multiplexed with the encrypted input signal to produce a composite signal.

According to a fifth aspect of the invention there is provided a receiver for carrying out a method according to said second aspect characterised in that it includes a pseudorandomiser according to said third aspect and a demultiplexer for separating the initialisation signal from the composite signal, said demultiplexer being connected to the initialisation register of the pseudorandomiser; wherein the receiver also comprises a demultiplexer for separating the control codes from the composite singal and applying each of said periodically occurring input code to transfer the content of the initialisation register as input to the pseudorandomiser whereby the pseudorandomiser generates the same pseudorandom signal as the transmitter and wherein the receiver also comprises combining means for receiving the encrypted signal, said combining means being connected to the output means of the pseudorandomiser whereby the decrypted signal is produced.

One embodiment of the invention will now be described by way of example with refence to the accompanying drawings in which: —

Figure 1 illustrates the structure of a time-multiplex frame for use in the invention;

Figure 2 illustrates a pseudorandomiser according to the invention;

Figure 3 illustrates a transmitter according to the invention, and

Figure 4 illustrates a receiver according to the invention.

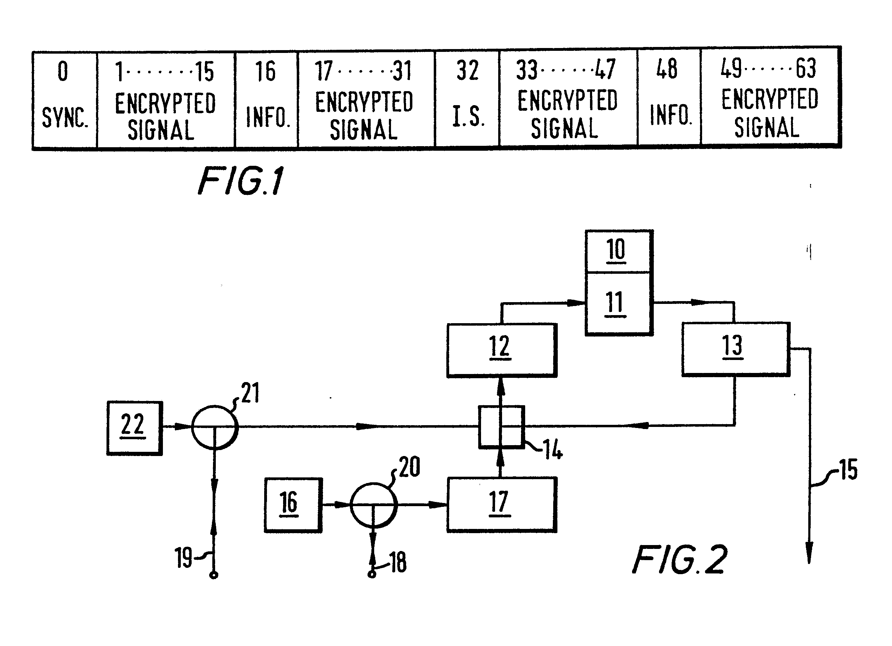

The method according to the invention applies digital encryption to a binary digital signal, which may be inherently digital, e. g. data transmission, or coded analogue, e. g. speech, video or facsimile. Time multiplexing is used for binary coded speech and the frame structure used is shown in Figure 1.

Each frame consists of sixty-four time slots of which sixty are used for communication and four are used for system and cryptographic purposes. Slots 0, 16 and 48 are used conventionally, i. e. slot 0 contains a fixed bit-pattern which enables the receiver to identify the start of each frame and slots 16 and 48 contain conventional signal information, e. g. ending or starting of traffic in specified slots. Slot 32 contains cryptographic as well as conventional framing information. The remaining slots, i. e. slots 1 to 15, slots 17 to 31, slots 33 to 47 and slots 49 to 63 contain a signal encrypted by a pseudorandom bit-stream. The generation of this stream will now be described; the pseudorandomiser used is illustrated in Figure 2.

The pseudorandomiser shown in Figure 2 is based on a conventional usage described in »FIPS PUB 81« as the »output feedback mode«. The apparatus comprises an encryption engine 11 containing a key 10. This receives an input word from an input register 12 and generates, using the DES algorithm, a pseudorandom first output word which is placed in an output register 13. The first output word is fed-back to the input register 12 via a switch 14 which is actuated by an initiation control unit 22. In addition to this feed-back the word in the output register 13 is also sent out, bit-by-bit, on the cypher output line 15. From the input register 12, the first output word passes through the encryption engine to generate a pseudorandomised second output word in the output register 13. The feed-back continues and thereby generates a chain of pseudorandomised words each of which is output, bit-by-bit, on the cypher output line 15; this output constitutes the pseudorandom bit-stream used for encryption. To initiate the chain it is necessary to provide an initial word in register 12; the initial word is called an »initialisation vector« or »IV«. The DES algorithm is capable of generating very long pseudorandom bit-strings from a single IV and long chains are usually used. The present method departs from this practice by frequently loading new initialisation vectors and thus uses rather short chains, preferably 512 output words long. The chains restart at frequent intervals, e. g. about 100 microseconds to 10 seconds depending on the rate of transmission.

To achieve this restart the pseudorandomiser shown in Figure 2 includes an initialisation stream generator 16, preferably a true random number generator, which supplies an initialisation bit-stream to an IV register 17 which assembles the initialisation stream into an IV. The restart is effected by control unit 22 which at suitable intervals, e. g. every 512 words in the feedback chain, transmits an input code to switch 14. This interrupts the feed-back from output register 13 to register 12 and transfers the IV in IV register 17 to input register 12. It will be apparent that each transfer starts a new chain with a new IV.

The initialisation stream (from generator 16) is also sent to transmission via initialisation lead 18 and the input code (from control unit 22) is also sent to transmission via control lead 19. Referring back to Figure 1, the initialisation stream and control pulses are multiplexed in slot 32.

At the receier there is an identical arrangement having mode switches 20 and 21 reversed to give a receive mode. The initialisation stream is taken from slot 32 and supplied, via mode switch 20, to IV register 17 where it is assembled into the same IV as at the transmitter. The input codes are also taken from slot 32 and supplied, via mode switch 21, to the switch 14, so that IV's, identical to those at the transmitter, are transferred to the input register 12 thereby operating an identical pseudorandom bit-stream or cypher output line 15. It is imperative that bit-streams are synchronised at transmitter and receiver. This is achieved according to the invention because the initialisation stream and control codes are multiplexed into a composite signal with a frame structure.

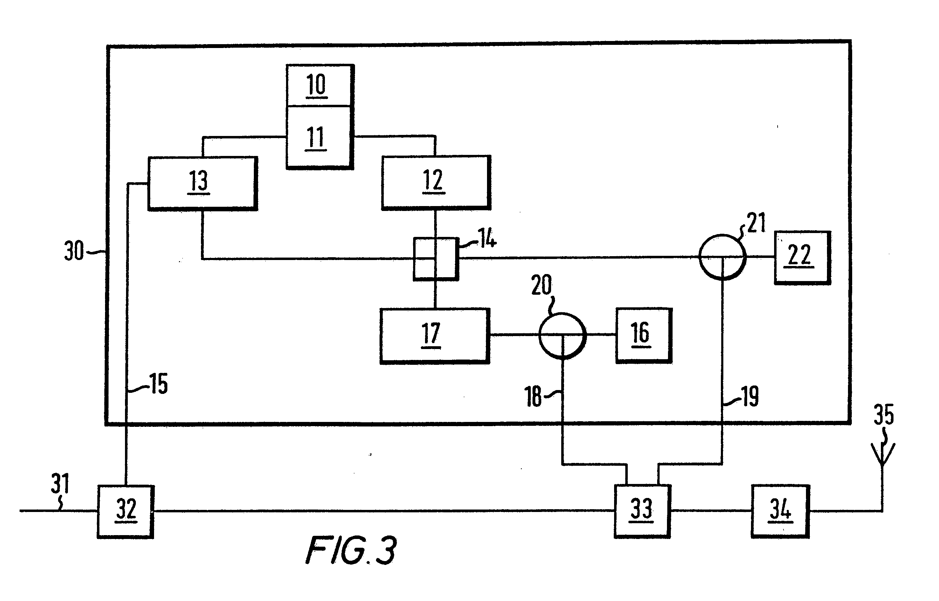

As shown in Figure 3 a transmitter according to the invention includes a pseudorandomiser 30 which is as shown in Figure 2 with mode switches 20 and 21 (as shown) in the »transmit« position.

The transmitter accepts a binary signal, e. g. multiplexed binary coded speech, on lead 31. This signal passes first to an »exclusive or« gate 32 where it is combined with the pseudorandom bit-string on line 15, and then to a multiplexer 33 where the initialisation stream (on line 18) is placed in slot 32 together with the restart code (on line 19). The composite signal thus produced passes to transmitter 34 and it is radiated (to a satellite) by aerial 35.

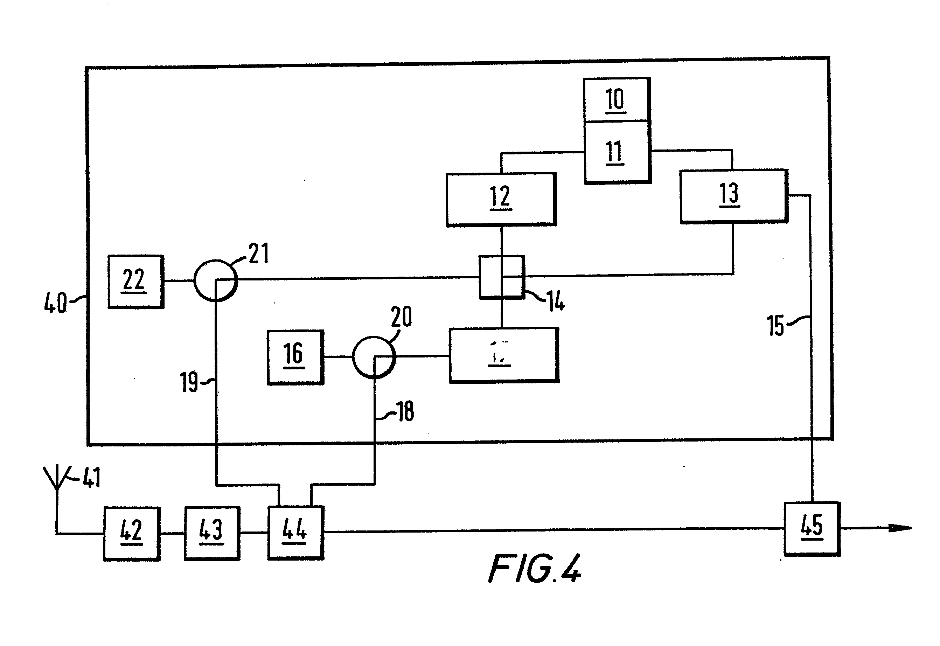

After broadcasting by the satellite the composite signal is received by the receiver shown in Figure 4. This also includes a pseudorandomiser 40 which is as shown in Figure 2 with mode switches 20 and 21 (as shown) in the »receiver position« (in which initialisation stream generator 16 and the control unit 22 are disconnected).

As shown in Figure 4, an aerial 41 picks up the composite signal and passes it to a receiver 42 and thence to a formatter 43 which recognises the sync-code in slot 0 and hence organises the signal into its frame. After formatting the signal passes to demultiplexer 44 which separates the initialisation stream from slot 32 and sends it, via line 18 and mode switch 20, to IV register 17. The demultiplexer 44 also separates the control pulses from slot 32 and sends them, via line 19 and mode switch 21, to switch 14.

The signal then passes to an »exclusive or« gate 45 where it is combined with the pseudorandom bit-stream on line 15. This decrypts the signal which continues for conventional processing, e. g. further demultiplexing.

The overall operation of the transmitter and receiver is as follows: —

As preparation the same key is placed in pseudorandomisers 30 and 40. The keys are provided by seucure transport. For example a large number of keys are recorded and conveyed by messenger to the transmitter and receivers; this makes it convenient to change the key every 24 hours. It is essential to have the same key at all stations. The key is the only »secret« element in the system.

Under control of the key the pseudorandomiser 30 produces a pseudorandom bit-stream which is applied to the signal by »exclusive or« gate 32. The initialisation stream, from which the pseudorandom stream is generated, is multiplexed with the signal and so are the control codes which indicate the use of a new IV.

At each receiver the control stream is separated by demultiplexer 44 and assembled in IV register 17 into the same IV as at the transmitter. The control codes, also demultiplexed from the composite signal, initiate the use of a new IV at the same time as at the transmitter so each pseudorandomiser 40 generates the same pseudorandom bit-stream which decrypts the signal at »exclusive or« gate 45. It is emphasised that the encryption and decryption do not depend on the nature of the multiplexing since the multiplexed signal is treated as a string of bits. Thus it is possible to use different forms of multiplex from time to time as the nature of the traffic charges. For speech it is convenient to multiplex 30 channels, i. e. slot »n« carries the same channel as slot »n + 32«. At higher information rates, e. g. video or data, it is convenient for all slots to carry the same channel.

The most important advantages of the invention are: —

i     achievement of synchronisation of the pseudorandomiser streams at transmit and receiver ends of a link without recourse to a return channel (broadcast or unidirectional application) since the system continuously transmits IVs and instructions about when to load them;

ii     achievement of a system wherein any loss of pseudorandomiser synchronisation (due to transmission faults, bit losses, or transmission interruptions of any duration) is speedily and automatically corrected because each time the system loads a new IV it effectively resynchronises the pseudorandomisers anew; and

iii     achievement of a system wherein a new receiver can join in a communication irrespective of how long the communication has already been in progress, i. e. simultaneous start-ups of transmitters and receivers is not required (important in a broadcast system wherein the operator could not shut everything down and restart every time a new receiver is brought on-line, maybe months after commencement of transmission).

## Claims

1. A method of producing encrypted data which comprises: —

(a) generating a pseudorandom key from an initialisation vector and a fixed key,

(b) combining the pseudorandom key with data to produce encrypted data; characterised in that: —

(c) the method is operated continuously on data in the form of continuous telecommunications traffic,

(d) an input code indicating the use of a new initialisation vector is periodically generated,

(e) a new initialisation vector is formed from a continuous initialisation signal on each occurrence of said input code,

(f) the continuous initialisation signal and the periodically occurring input code are multiplexed with the encrypted traffic to produce a composite signal which is transmitted.

2. A method of transmitting a binary digital signal as claimed in claim 1 wherein the combining step is carried out by pairing the bits of the signal with the bits of a pseudorandom stream and operating with »exclusive or« on each pair.

3. A method of producing a decrypt from encrypted data which comprises: —

(a) generating a pseudorandom key from an initialisation vector and a fixed key,

(b) combining the pseudorandom key with encrypted data; characterised in that: —

(c) the method is operated continuously on continuously received telecommunications traffic transmitted according to the method of either claim 1 or claim 2 and the initialisation vector is formed from a continuous initialisation signal and a periodically occurring input code demultiplexed from the received traffic.

4. Pseudorandomiser which comprises a cipher engine (11) adapted to generate a pseudorandom key from an initialisation vector and a fixed key characterised in that the pseudorandomiser also includes: —

(a) means (16) for generating a continuous initialisation signal,

(b) means (22) for periodically generating an input code,

(c) an initialisation register (17) for forming a new initialisation vector from the continuous initialisation signal on each occurrence of said input code,

(d) transfer means (14) for transferring the content of the initialisation register (17) as input to the ciphering engine (11) on receipt of the input code, and

(e) output means for converting the pseudorandom key into a continuous pseudorandom signal.

5. Pseudorandomiser according to claim 4, characterised in that said means for generating the continuous initialisation signal is a random number generator (16).

6. A transmitter for carrying out a method according to claim 1 characterised in that it includes a pseudorandomiser (30) according to claim 5 and a combining means (32) for receiving data in the form of a continuous telecommunications signal, said combining means (32) being connected to the output means of the pseudorandomiser whereby the input signal is encrypted, the transmitter also comprising a multiplexer (33) connected to the random number generator (33) and a multiplexer (33) connected to the control means whereby the initialisation signal and the periodically occurring input code are multiplexed with the encrypted input signal to produce a composite signal.

7. A transmitter according to claim 6 wherein the combining means is an »exclusive or« gate.

8. A receiver for carring out a method according to claim 3 characterised in that it includes a pseudorandomiser (40) according to claim 4 and a demultiplexer (44) for separating the initialisation signal from the composite signal, said demultiplexer being connected to the initialisation register (17) of the pseudorandomiser; wherein the receiver also comprises a demultiplexer (44) for separating the control codes from the composite signal and applying each of said periodically occurring input code to transfer the content of the initialisation register (17) as input to the pseudorandomiser whereby the pseudorandomised generates the same pseudorandom signal as the transmitted and wherein the receiver also comprises combining means (45) for receiving the encrypted signal, said combining means (45) being connected to the output means of the pseudorandomiser whereby the decrypted signal is produced.

9. A receiver according to claim 8 wherein combining means is an »exclusive or« gate.

## Patentansprüche

1. Verfahren zur Erzeugung verschlüsselter Daten mit

a) Erzeugen eines Pseudozufallsschlüssels aus einem Anlaufvektor und einem festen Schlüssel,

b) Kombination des Pseudozufallsschlüssels mit Daten, um verschlüsselte Daten zu erzeugen,
dadurch gekennzeichnet, daß

c) das Verfahren kontinuierlich mit Daten in Form eines kontinuierlichen Fernmeldeverkehrs betrieben wird,

d) ein Eingabecode, der die Verwendung eines neuen Anlaufvektors angibt, periodisch erzeugt wird,

e) ein neuer Anlaufvektor aus einem kontinuierlichen Anlaufsignal auf jedes Auftreten des Eingabecodes erzeugt wird,

f) das kontinuierliche Anlaufsignal und der periodisch auftretende Eingabecode mit dem verschlüsselten Verkehr im Multiplex als zusammengesetztes Signal übertragen wird.

2. Verfahren zur Übertragung eines binären Digitalsignals nach Anspruch 1,
dadurch gekennzeichnet,
daß der Kombinationsschritt durch Paarung der Bits des Signals mit den Bits eines Pseudozufallsstrom und durch eine Exklusiv-Oder-Verknüpfung jedes Bitpaars durchgeführt wird.

3. Verfahren zur Erzeugung entschlüsselter Daten aus verschlüsselten Daten mit

a) Erzeugung eines Pseudozufallsschlüssels aus einem Anlaufvektor und einem festen Schlüssel,

b) Kombination des Pseudozufallsschlüssels mit verschlüsselten Daten,
dadurch gekennzeichnet, daß

c) das Verfahren kontinuierlich mit kontinuierlich empfangenem Fernmeldeverkehr, der gemäß dem Verfahren von Anspruch 1 oder 2 übertragen wird, durchgeführt wird, und der Anlaufvektor aus einem kontinuierlichen Anlaufsignal und einem periodisch auftretenden Eingabecode erzeugt wird, der aus dem empfangenen Verkehr durch Demultiplexen erhalten ist.

4. Pseudozufallsvorrichtung mit einer Chiffriermaschine (11), die aus einem Anlaufvektor und einem festen Schlüssel einen Pseudozufallsschlüssel erzeugt,
dadurch gekennzeichnet,
daß die Pseudozufallsvorrichtung weiterhin aufweist:

a) eine Einrichtung (16), die ein kontinuierliches Anlaufsignal erzeugt,

b) eine Einrichtung (22), die periodisch einen Eingabecode erzeugt,

c) ein Anlaufregister (17), das einen neuen Anlaufvektor aus dem kontinuierlichen Anlaufsignal bei jedem Auftreten des Eingabecodes bildet,

d) eine Übertragungseinrichtung (14), die den Inhalt des Anlaufregisters (17) dem Eingang der Chiffriermaschine (11) auf den Empfang des Eingabecodes überträgt, und

e) eine Ausgabeeinrichtung, die den Pseudozufallsschlüssel in ein kontinuierliches Pseudozufallssignal umsetzt.

5. Pseudozufallsvorrichtung nach Anspruch 4,
dadurch gekennzeichnet,
daß die Einrichtung, die das kontinuierliche Anlaufsignal erzeugt, ein Zufallszahlengenerator (16) ist.

6. Sendevorrichtung zur Durchführung des Verfahrens gemäß Anspruch 1,
dadurch gekennzeichnet,
daß sie eine Pseudozufallsvorrichtung (30) nach Anspuch 5 und eine Kombiniereinrichtung (32) enthält, die Daten in Form eines kontinuierlichen Fernmeldesignals empfängt und mit der Ausgabeeinrichtung der Pseudozufallsvorrichtung verbunden ist, wodurch das Eingabesignal verschlüsselt wird und daß die Sendevorrichtung auch einen mit dem Zufallszahlengenerator verbundenen Multiplexer (33) und einen mit der Steuereinrichtung verbundenen Multiplexer (33) aufweist, wodurch das Anlaufsignal und der periodisch auftretende Eingabecode im Multiplexbetrieb mit dem verschlüsselten Eingabesignal im Multiplexbetrieb ein zusammengesetztes Signal ergeben.

7. Sendevorrichtung nach Anspruch 6,
dadurch gekennzeichnet,
daß die Kombiniereinrichtung ein Exklusiv-Oder-Glied ist.

8. Empfänger zur Durchführung eines Verfahrens nach Anspruch 3,
dadurch gekennzeichnet,
daß er eine Pseudozufallsvorrichtung (40) nach Anspruch 4 und einen Demultiplexer (44) enthält, der das Anlaufsignal vom zusammengesetzten Signal trennt und der mit dem Anlaufregister (17) der Pseudozufallsvorrichtung verbunden ist, wobei der Empfänger auch einen Demultiplexer (44) enthält, der die Steuercodes vom zusammengesetzten Signal trennt und jeden der periodisch auftretenden Eingabecodes zur Übertragung des Inhalts des Anlaufregisters (17) der Pseudozufallsvorrichtung als Eingang zuführt, wodurch die Pseudozufallsvorrichtung dasselbe Pseudozufallssignal wie das gesendete erzeugt und wobei der Empfänger auch eine Kombiniereinrichtung (45) aufweist, die das verschlüsselte Signal empfängt und mit der Ausgabeeinrichtung der Pseudozufallsvorrichtung verbunden ist, wodurch das entschlüsselte Signal erzeugt wird.

9. Empfänger nach Anspruch 8,
daduch gekennzeichnet,
daß die Kombiniereinrichtung ein Exklusiv-Oder-Glied ist.

**Revendications**

1. Un procédé pour produire des données chiffrées qui comprend:

(a) la génération d'une clé pseudo-aléatoire à partir d'un vecteur d'initialisation et d'une clé fixe,

(b) la combinaison de la clé pseudo-aléatoire avec des données pour produire des données chiffrées; caractérisé en ce que:

(c) le procédé travaille de façon continue sur des données sous la forme d'un trafic de télécommunication continu,

(d) un code d'entrée indiquant l'utilisation d'un nouveau vecteur d'initialisation est produit périodiquement,

(e) un nouveau vecteur d'initialisation est formé à partir d'un signal d'initialisation continu à chaque apparation du code d'entrée,

(f) le signal d'initialisation continu et le code d'entrée apparaissant périodiquement sont multiplexés avec le trafic chiffré pour produire un signal composite qui est émis.

2. Un procédé d'émission d'un signal numérique binaire selon la revendication 1, dans lequel on accomplit l'opération de combinaison en associant par paires les bits du signal avec les bits d'un train pseudo-aléatoire et en appliquant une fonction »ou-exclusif« à chaque paire.

3. Un procédé pour produire des données déchiffrées à partir de données chiffrées, qui comprend:

(a) la génération d'une clé pseudo-aléatoire à partir d'un vecteur d'initialisation et d'une clé fixe,

(b) la combinaison de la clé pseudo-aléatoire avec des données chiffrées; caractérisé en ce que:

(c) le procédé travaille de façon continue sur un trafic de télécommunication reçu de façon continue qui est émis conformément au procédé de la revendication 1 ou de la revendication 2, et le vecteur d'initialisation est formé à partir d'un signal d'initialisation continu et d'un code d'entrée apparaissant périodiquement, démultiplexés à partir du trafic reçu.

4. Dispositif de conversion sous forme pseudo-aléatoire comprenant un moteur de chiffrement (11) conçu de façon à produire une clé pseudo-aléatoire à partir d'un vecteur d'initialisation et d'une clé fixe, caractérisé en ce qu'il comprend également:

(a) des moyens (16) destinés à produire un signal d'initialisation continu,

(b) des moyens (22) destinés à produire périodiquement un code d'entrée,

(c) un registre d'initialisation (17) destiné à former un nouveau vecteur d'initialisation à partir du signal d'initialisation continu, à chaque apparition du code d'entrée,

(d) des moyens de transfert (14) destinés à transférer le contenu du registre d'initialisation (17), en tant que signal d'entrée pour le moteur de chiffrement (11), à la réception du code d'entrée, et

(e) des moyens de sortie destinés à convertir la clé pseudo-aléatoire en un signal pseudo-aléatoire continu.

5. Dispositif de conversion sous forme pseudo-aléatoire selon la revendication 4, caractérisé en ce que les moyens destinés à produire le signal d'initialisation continu consistent en un générateur de nombres aléatoires (16).

6. Un émetteur destiné à la mise en œuvre d'un procédé conforme à la revendication 1, caractérisé en ce qu'il comprend un dispositif de conversion sous forme pseudo-aléatoire (30) conforme à la revendication 5 et des moyens de combinaison (32) destinés à recevoir des données sous la forme d'un signal de télécommunication continu, ces moyens de combinaison (32) étant connectés aux moyens de sortie du dispositif de conversion sous forme pseudo-aléatoire, grâce à quoi le signal d'entrée est chiffré, l'émetteur comprenant également un multiplexeur (33) qui est connecté au générateur de nombres aléatoires et un multiplexeur (33) qui est connecté aux moyens de commande, grâce à quoi le signal d'initialisation et le code d'entrée apparaissant périodiquement sont multiplexés avec le signal d'entrée chiffré pour produire un signal composite.

7. Un émetteur selon la revendication 6, dans lequel les moyens de combinaison consistent en une porte »ou-exclusif«.

8. Un récepteur destiné à la mise en œuvre d'un procédé conforme à la revendication 3, caractérisé en ce qu'il comprend un dispositif de conversion sous forme pseudo-aléatoire (40) conforme à la revendication 4, et un démultiplexeur (44) destiné à séparer le signal d'initialisation du signal composite, ce démultiplexeur étant connecté au registre d'initialisation (17) du dispositif de conversion sous forme pseudo-aléatoire; le récepteur comprenant également un démultiplexeur (44) destiné à séparer les codes de commande du signal composite et à appliquer chacun des codes d'entrée apparaissant périodiquement, pour transférer le contenu du registre d'initialisation (17), en tant que signal d'entrée pour le dispositif de conversion sous forme pseudo-aléatoire, grâce à quoi ce dernier produit le même signal pseudo-aléatoire que l'émetteur, et le récepteur comprend également des moyens de combinaison (45) destinés à recevoir le signal ciffré, ces moyens de combinaison (45) étant connectés aux moyens de sortie du dispositif de conversion sous forme pseudo-aléatoire, grâce à quoi on obtient le signal déchiffré.

9. Un récepteur selon la revendication 8, dans lequel les moyens de combinaison consistent en une porte »ou-exclusif«.

| 0 | 1 · · · · · · 15 | 16 | 17 · · · · · 31 | 32 | 33 · · · · · 47 | 48 | 49 · · · · · · 63 |
|---|---|---|---|---|---|---|---|
| SYNC. | ENCRYPTED SIGNAL | INFO. | ENCRYPTED SIGNAL | I.S. | ENCRYPTED SIGNAL | INFO. | ENCRYPTED SIGNAL |

*FIG.1*

*FIG.2*

0 093 525

*FIG.3*

FIG.4